# EUROPEAN PATENT SPECIFICATION

(11) **EP 4 460 777 B1**
(45) Date of publication and mention of the grant of the patent: **08.04.2026**
(21) Application number: 22711177.0
(22) Date of filing: 18.02.2022
(51) Int. Cl.: G06F 21/53, G06F 21/60

(54) **CONTROL DEVICE COMPRISING A PROCESSOR CIRCUIT FOR EXECUTING APPLICATIONS THAT USE CRYPTOGRAPHIC SERVICE FUNCTIONS AND METHOD FOR OPERATING THE CONTROL DEVICE AND MOTOR VEHICLE**
STEUERGERÄT MIT EINER PROZESSORSCHALTUNG ZUR AUSFÜHRUNG VON ANWENDUNGEN MIT KRYPTOGRAPHISCHEN SERVICEFUNKTIONEN SOWIE VERFAHREN ZUM BETREIBEN DES STEUERGERÄTS UND KRAFTFAHRZEUG
DISPOSITIF DE COMMANDE COMPRENANT UN CIRCUIT DE PROCESSEUR POUR EXÉCUTER DES APPLICATIONS QUI UTILISENT DES FONCTIONS DE SERVICE CRYPTOGRAPHIQUE ET PROCÉDÉ POUR FAIRE FONCTIONNER LE DISPOSITIF DE COMMANDE ET VÉHICULE À MOTEUR

(43) Date of publication of application: 13.11.2024
(73) Proprietor: CARIAD SE, 38440 Wolfsburg (DE)
(72) Inventor: AHRENS, Sebastian, 38162 Cremlingen (DE); DORNEMANN, Frederik, 38448 Wolfsburg (DE); DÜRKOP, Lars, 38543 Hillerse (DE); MASULA, Andrej, 12621 Berlin (DE)
(74) Representative: Hofstetter, Schurack & Partner
(86) International application number: PCT/EP2022/054159
(87) International publication number: WO 2023/156006

(56) References cited:
- US-A1- 2016 344 704
- US-A1- 2021 152 341
- IORIO MARCO ET AL: "Securing SOME/IP for In-Vehicle Service Protection", IEEE TRANSACTIONS ON VEHICULAR TECHNOLOGY, IEEE, USA, vol. 69, no. 11, 6 October 2020 (2020-10-06), pages 13450 - 13466, XP011819972, ISSN: 0018-9545, [retrieved on 20201112], DOI: 10.1109/TVT.2020.3028880

## Description

The invention is concerned with a control device comprising a processor circuit for executing applications that use a cryptographic service functions. The invention also provides a method for operating the control device and a motor vehicle comprising the control device.

For security reasons some cryptographic data or material has to be stored in a secure hardware environment (TEE - trusted execution environment). Some materials have to be stored inside the TEE, but can be exposed temporarily and some must not ever leave the TEE. For the latter ones all computations involving them must be executed inside the TEE as well. One example of such data material is a cryptographic key that may only be used inside the TEE.

For the first ones, it would be possible to the cryptographic service functions for doing the operations inside the TEE, but each operation there is expensive regarding memory and runtime. Therefore it is beneficial to perform such operations outside the TEE.

For an application program of a control device, this requires using two different APIs (application programming interface). One for the operations involving the TEE and one for the operations without. Moreover, the application has to have advanced knowledge about security architectures, which material is confidential or retrievable and which operations have to be performed where (inside or outside the TEE). This makes developing such applications error prone and burdensome.

Document EP 0 843 249 A1 describes a cryptography framework that allows to provide cryptographic service function in different computers on the basis of a hardware cryptographic unit. Based on the cryptography framework the program code of an application may be verified using certificates that are stored within the cryptography framework.

Documents WO 2018/038878 A1 and WO 2009/137567 A1 describe trusted execution environments where software code may be executed.

US 2016/344704 A1 discloses a method for authorizing a function of an embedded electronic control unit.

The prior art does not provide an optimization of applications of a control device such that the applications may benefit from both the secure hardware environment (like a TEE) on one side and the faster and less complex cryptographic service functions that may be executed outside such a secure hardware environment.

It is an objective of the present invention to provide a flexible framework for adapting an application to the available cryptographic service functions in a specific control device, in particular a control device for a motor vehicle.

The objective is accomplished by the subject matter of the independent claims. Advantageous developments with convenient and non-trivial further embodiments of the invention are specified in the following description, the dependent claims and the figures.

As one solution, the invention comprises a control device comprising a processor circuit (e.g. a CPU with one or more than one kernel) for executing applications that use a cryptographic service functions or cryptographic operations. As is known from the prior art, the processor circuit is adapted to execute the respective application as a process of the processor circuit. Such a process is constituted by the binary software code of the application that is in the execution state, i.e. it may be assigned a memory address space in a random access memory RAM and/or a data structure that describes the current state of execution. During execution, the respective application triggers or operates the respective service function by calling a respective programming interface of the service function.

The control device also comprises a trusted environment hardware module that may be designed as a TEE or as a hardware security module HSM, just to name examples. Such a trusted environment hardware module may be integrated into the processor circuit or it may be provided as a separate integrated circuit that is connected to the processor circuit.

For reducing the complexity of adapting the applications to the available cryptographic service functions of a specific or given control device, an interface module is provided that comprises the programming interfaces for calling the service functions. In other words, the interface module forms an abstraction layer between the cryptographic service functions and the applications. When an application calls the programming interfaces of a service function, the interface module is adapted to call one of the following implementations of the service function depending on which service function the respective programming interface belongs to or depending on which service function is to be called:
- a local implementation that is executable as a part of the process of the calling application (e.g. as an executable function or as a dedicated separate thread) or in a parallel process of the processor circuit (e.g. in a so-called daemon), and/or
- an external implementation that is provided by the hardware module, and/or
- a mixed implementation that uses both the local and the external implementation to provide a respective part of the service function.

In particular, at least one service function is a local implementation and at least one other service function is an external implementation.

The interface module provides the benefit that each application can be presented one single API providing the programming interfaces for calling all the service functions. The respective application does not need to be prepared or adapted in such a way that inside the application itself, i.e. inside its own program code, a distinction between the local implementation and the external implementation needs to be made. The application itself may call a programming interface and the knowledge or logic for distinguishing between local implementations and external implementations of service functions is provided inside the interface module. Thus, whenever a change in the organization or arrangement of implementations of service functions is given in a control device, by adapting the interface module these changes can be considered or addressed and the applications themselves do not need to be serviced or adapted otherwise.

In connection with a motor vehicle, the inventive control device can be designed as an electronic control unit, ECU, or a network comprising several such ECUs. The term "processor circuit" refers to the CPU hardware, that may be based, for example, on a RISC-architecture (reduced instruction set computer) or a CISC-architecture (complex instruction set computer). Integrating a trusted environment hardware module in the processor circuit can be achieved by means of a SOC-architecture (SOC - system on chip).

A "local implementation" of a service function can be provided by designing the interface module itself such that it comprises software code or program code that implements or provides the service function. As an alternative, a local implementation may be provided by a parallel process of the processor circuit wherein this parallel process is outside the hardware module. For example, a program or process running at the same time as the application process itself may provide the service function. An "external implementation" of a service function is provided inside a hardware module and can be based on an implementation known from the prior art. In general, all operations that are not executed in the TEE, can be executed faster. This is the main reason why the interface module exists.

The interface module is designed as an interchangeable software module that is interchangeable in the processor circuit independently of the application. In other words, the interface module is a software module that is not linked statically to the program code of the applications itself.

The invention also comprises further developments that provide features which afford additional technical advantages.

A further benefit is obtained, if in the interface module is provided as a software library and the processor circuit is adapted to dynamically link the software library to the respective application, e.g. on start-up of the application. In other words, the interface module is not a separate process, but it is integrated in the process of the application itself. For providing a dynamically linking software library, the interface module can be provided as a so called shared object or dynamic link library. An alternative possibility of implementing such an interface module is given by running the interface module as a separate process on the processor circuit. This comes with an additional overhead of inter-process communication between the application process and the interface module.

A further benefit is obtained, if the processor circuit or another processor circuit of the control device is adapted to operate a common access server to the hardware module. Such an access server constitutes a separate process in the control device. The respective process of each application is connected to the hardware module over this common access server. In other words, for all those externally implemented service functions in the hardware module, all applications must access the hardware module through a common or the same access server that will receive the calls for the service functions from all the applications. This provides the advantage that an access control to the hardware module can be controlled or centralized in the access server. Another benefit is that the access server is operated outside the process context of the actual calling application. This protects the access server against possible security leaks in the application.

A further benefit is obtained, if the access server is a UDS server (UDS -Unix domain socket) and the interface module is designed to call the respective external implementation the service function using inter process communication to the UDS server. Using the UDS protocol makes it possible to provide a communication on the basis of an inter process communication, IPC. Using UDS for the IPC has the advantage that the access server can identify the calling process. Thus, no process can falsely impersonate another process in order to obtain its access rights to the TEE.

A further benefit is obtained, if the applications comprise a client module for communicating with the access server, wherein the client module additionally comprises a local dummy implementation of the respective external implementation of at least one service function. The client module can be implemented as a software library that may be linked (statically or dynamically) to the program code of the respective application. The client module can be designed as a UDS-client in the case of the already described UDS server. By providing a local dummy implementation of the external implementations, a test run or during development of an application can be provided or performed without the need of providing the actual hardware module. In particular, an application can be tested and developed for use with different hardware modules without the necessity of having the actual hardware modules available.

A further benefit is obtained, if the interface module is designed to decide statically. This means that inside the interface module, the decision of using a local implementation or an external implementation is hard-coded and is thus identical for all calls to the respective service function. For example, the local implementations can be provided as local executable functions that are part of the interface module itself. The programming interface for such a local implementation is the so called function header. An external implementation (in the hardware module) can be accessed by providing a programming interface in the form of a function header of a local function that only comprises the actual call or access to the external implementation of the service function. By statically deciding inside the interface module, if a specific service function is a local implementation or an external implementation, only one implementation per service function is necessary, either a local one or an external one.

A further benefit is obtained, if the interface module is designed to decide dynamically which implementation is to be used. "Dynamically" means that the interface module is designed to perform a look-up or a decision which implementation is to be used based on predefined configuration data. This decision can be made once on start-up of the control device or on start-up of the respective application or each time a respective call of the programming interface is received. In other words, in the control device, based on the configuration data it may be determined, which service function may be available in the hardware module and which service function is to be provided as a local implementation by the interface module itself. Thus, this module may dynamically adapt to the given conditions or configuration of the control device. It may then generate configuration data that control the look-up such that when a programming interface of a specific service function is called, the configuration data decide whether a local implementation of the service function is to be executed or an external implementation of the service function in the hardware module shall be called or executed. The configuration data may be generated on start-up of the control device or the configuration data may be loaded from a non-volatile memory where the configuration data may be stored.

As has been explained above, all operations that are not executed in the TEE, can be executed faster. In the following, two exemplary operations are described that may be implemented locally. A further benefit is obtained, if the local implementation provides a random number generation, RNG, and/or a hash generation and/or a AEAD decryption (AEAD . Authenticated Encryption with Associated Data). It has been found that in some use cases, the cryptographic secret material or cryptographic secrets of the AEAD encryption do not necessarily need the protection of a hardware module (such as a TEE) such that they may be executed in the processor circuit as part of the process of the application itself which results in a comparatively faster execution as compared to an execution in the hardware module.

A further benefit is obtained, if the external implementation provides a cryptographic key based operation that uses a cryptographic key that is stored inside the hardware module. A cryptographic key can be processor specific or control device specific. By providing this service function using the cryptographic key inside the hardware module, there is no need to expose the cryptographic key at the hardware module. This protects the cryptographic key material from attempt to copy or manipulate the cryptographic key.

The invention also comprises this method for operating a control device. Like has already been described, a processor circuit of the control device executes applications that use a cryptographic service functions by calling a respective programming interface of the service function. In the known manner, the processor circuit executes the respective application as a process of the processor circuit. Also, the control device comprises a trusted environment hardware module.

For providing a unified and adaptable interface for accessing the service functions, an interface module is provided that comprises the programming interfaces for calling the service functions and calls one of the already described implementations of the service function depending on which service function is called over the respective programming interface.

In other words, the inventive control device is adapted to perform an embodiment of the method according to the invention. For this purpose, its processor circuit may comprise at least one microprocessor and/or at least one microcontroller and/or at least one FPGA (field programmable gate array) and/or at least one DSP (digital signal processor). Furthermore, the control device may comprise program code which comprises computer-readable instructions to perform the embodiment of the method according to the invention when executed by the processor circuit or the processor circuit and the describe further processor circuit. The program code may be stored in a data storage of the control device.

The invention also comprises embodiments of the inventive method that comprise features that correspond to features as they have already been described in connection with the embodiments of the control device. For this reason, the corresponding features of the embodiments of the inventive method are not described here again.

As a further solution, the invention comprises a motor vehicle comprising at least one control device that is an embodiment of the described control device. The inventive vehicle is preferably designed as a motor vehicle, in particular as a passenger vehicle or a truck, or as a bus or a motorcycle. The at least one control device of the motor vehicle may be designed to operate an infotainment system and/or an engine of the vehicle.

The invention also comprises the combinations of the features of the different further developments or embodiments. The scope of the invention is defined by the independent claims.

In the following an exemplary implementation of the invention is described. The figures show:
- Fig. 1: a schematic illustration of an embodiment of the inventive motor vehicle; and
- Fig. 2: a schematic illustration of a processor circuit of a control device of the motor vehicle according to Fig. 1.

The embodiment explained in the following is a preferred embodiment of the invention.

However, in the embodiment, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment can also be supplemented by further features of the invention already described.

In the figures identical reference signs indicate elements that provide the same function.

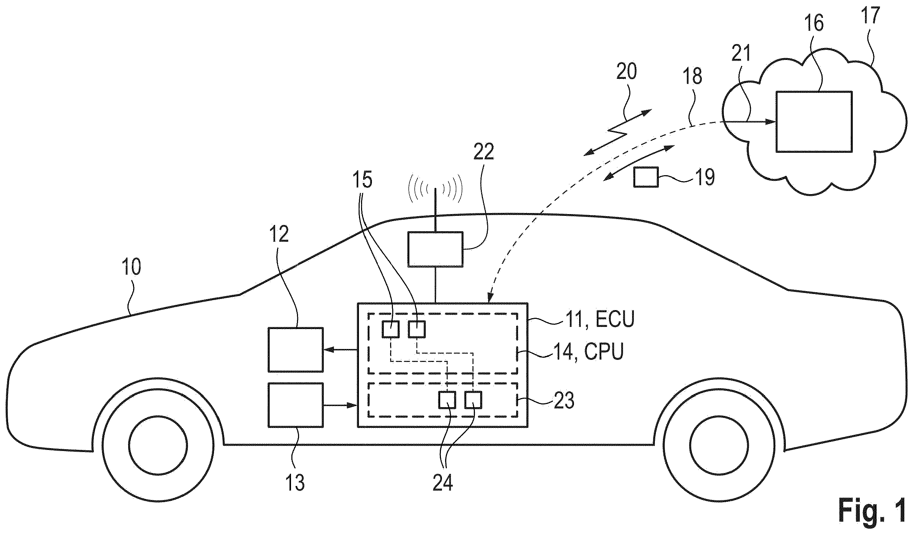

Fig. 1 shows a motor vehicle 10 that can be designed, for example, as a passenger vehicle or a truck. The vehicle 10 may comprise an electronic control unit ECU that may constitute a control device 11 for operating at least one display (not illustrated) or at least one actuator 12 and/or at least one sensor 13 of vehicle 10. The control device 11 may be part, for example, of an infotainment system and/or a climatization system and/or an engine control and/or a electric charging device of vehicle 10. The control device 11 may comprise a processor circuit 14 that may constitute a central processing unit CPU for executing or running software applications 15 for providing a respective functionality in the vehicle 10. For example, such a functionality may comprise the control of a charging process for charging energy storage of the vehicle 10 and/or a master application for controlling the clock of the control device 11. Which applications are run on the processor circuit 14 depends on the type of control device and the skilled person may refer to the prior art for a choice of applications 15.

The control device 11 may be connected to a backend server 16 that may be operated in the internet 17. The connection may be established using a communication link 18 for exchanging data 19. The communication link 18 may comprise a wireless radio link 20 and/or an internet connection 21. For establishing the communication link 18, the control device 11 may be connected to a communication module 22, for example a communication module for a mobile network and/or a wireless local area network WLAN.

For example, by means of the transmitted data 19, a manipulation of the control device 11 may be attempted by a third party. In order to protect the control device 11 against unauthorized and/or un-authentic data 19, the control device 11 may also comprise a trusted environment hardware module or in short a hardware module 23 for providing at least one cryptographic service function 24 that is protected against a manipulation from outside. Such a hardware module 23 may be based on a TEE and/or an HSM.

The software code or program code of the applications 15 (application software) must correctly call the service functions 24 or, if an appropriate service function 24 is missing in the hardware module 23, a substitute service function must be provided that may run on the processor circuit 14 itself.

In the control device 11, the applications 15 do not need to be adapted in such a way that knowledge about where the respective service function 24 is provided (either in the hardware module 23 or outside the hardware module 23 in the processor circuit 14). Instead, the applications 15 may call or start programming interfaces 30 for service calls 31 to cryptographic service functions or operations.

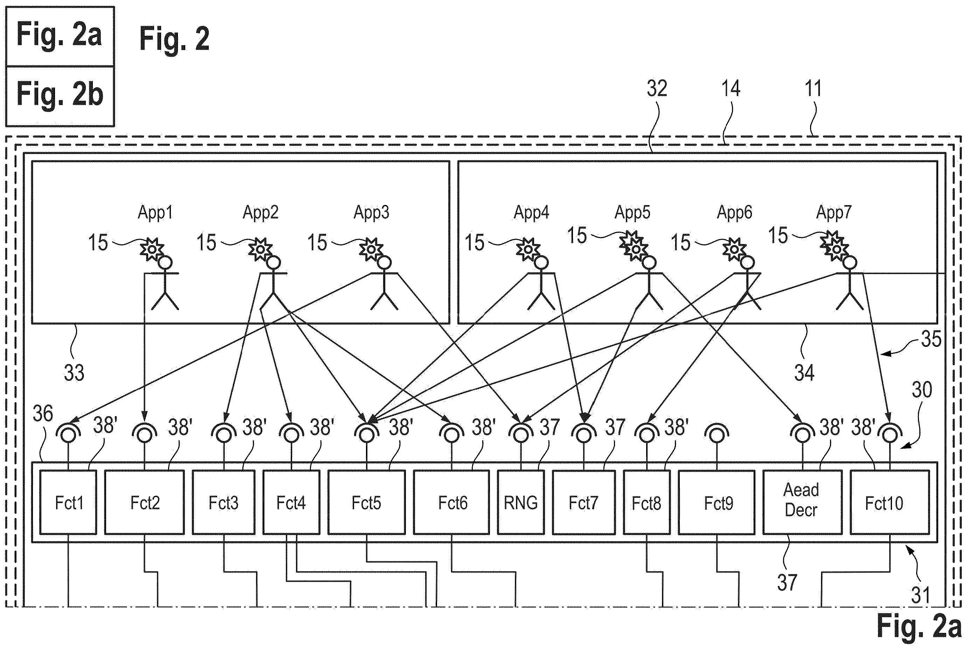

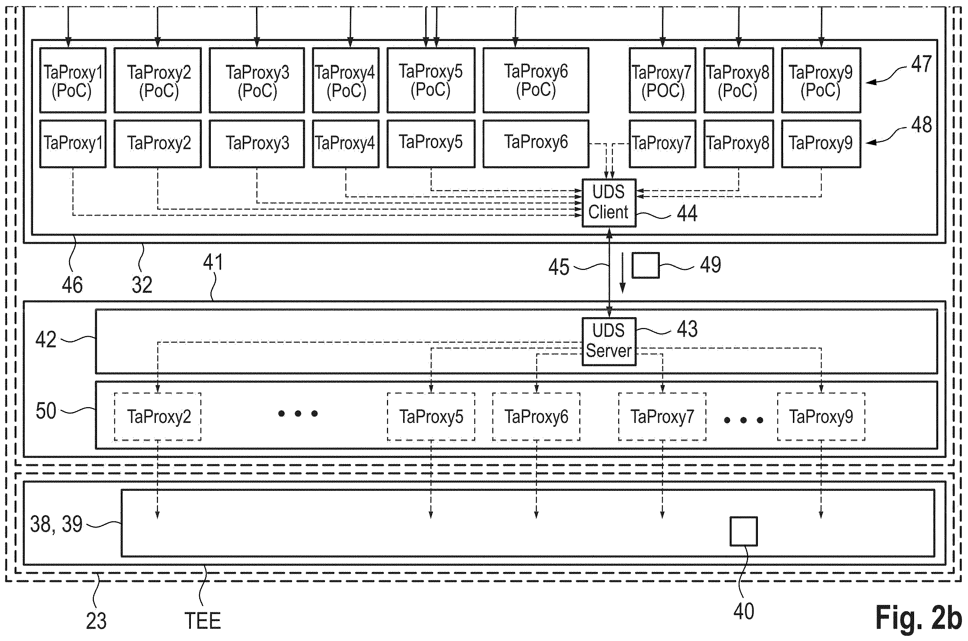

Fig. 2 illustrates that each application 15 may be executed in the processor circuit 14 as a software process 32. The applications 15 may be each either a user application 33 or a platform application 34 for providing basic services in the control device 11. It is noted here that in Fig. 2, only one process 32 is illustrated which represents one exemplary process for one of the applications 15. The fact that several applications 15 are shown inside the process 32 simply symbolized that each application may be run as such a process 32.

Arrows 35 indicate which application 15 depends on or calls which programming interface 30 for calling a respective service function 31. The application interfaces 30 may be provided by an interface module 36 that may be linked to the respective application 15 in the form of a software library, e.g. a dynamic link library.

The knowledge about where the respective service function 31 is actually implemented is provided in the decision module 36. The applications 15 themselves do not need to provide or comprise knowledge about where the service functions 31 are implemented as they call the unified or common programming interfaces 30 provided by the interface module 36.

Fig. 2 illustrates that from the service functions 31 there are local implementations 37 of service functions 31 that are provided inside the interface module 36 itself. Thus, the service functions 31 with local implementations 37 are executed or run in the processor circuit 14 and they may even be part of the process 32 of the respective application 15.

Other service functions 31 may be based on an external implementation 38 that may be implemented or operated or executed inside the hardware module 23 for example in a trusted execution environment TEE. These external implementations 38 have their program code or their hardware implementation provided by the hardware module 23 is encapsuled service functions 39. For example, these external implementations 38 may be based on at least one cryptographic key 40 that may be stored in the hardware module 23. Fig. 2 does not show detailed implementations 38 inside the hardware module 23 as this is generally variable or changing depending on the manufactory of the hardware module 23.

Inside the interface module 36, the external implementations 38 may be represented or may be made accessible by respective calling function 38'. Thus, the external implementations 38 inside the hardware module 36 become accessible for the respective process 32 of the respective application 15.

In order to connect the interface module 36 to the external implementations 38 of the service functions 39 in the hardware module 23, another process 41 may run on the processor circuit 14 that provides an access server 42 that may be based on a UDS server 43. In a the process 32 of an application 15, a corresponding client 44, especially an UDS client, may be operated as a software module and the client 44 may communicate with the access server 42 using an inter-process communication 45, for example a shared memory communication and/or an IP-socket base communication (IP - Internet protocol). The client 44 may be implemented or provided as a client module 46 that may be statically or dynamically linked to the application 15 such that it becomes a part of the process 32 of the application 15.

For development purposes and/or testing services (PoC - prove of concept), the client module may provide local dummy implementations 47 of the respective internal implementations 38. Possible service functions are named in Fig. 2 as exemplary use cases.

For the actual operation of the control device 11, instead of the local dummy implementations 47, calling functions 48 may be used or activated such that a call of a programming interface 30 for a service function 39 in the hardware module 23 may lead to a call of the service function 39 via the inter-process communication 45. Calls may be designed in the way that is known from the prior art, for example as function calls or API calls.

In particular, the call functions 48 may provide a communication stack that may hide the communication that takes place over the inter-process communication 45 such that in the access server 42, corresponding communication stacks 50 may be operated and the communication via the client 44 and the access server 42 is transparent for the call function 48. From there, call signals 49 may be transferred to the hardware module 23. For example, the access server 42 may be linked to the hardware module 23 via electric communication lines and/or a hypervisor and/or a shared memory. This solution is named TaProxy in the figures.

Once the service function 39 in the hardware module 23 is executed, the result of this operation (for example an encrypted message and/or a decrypted message) may be returned to the calling application 15 for example using the communication stacks 50 for transferring the data to the interface module 36 where the programming interface 30 may return from the call and provide the result to the calling application 15. Likewise, a call to a local implementation 37 may return the result of the operation to the calling application 15.

Thus, the application 15 is provided with the result of the call of the service function independently of whether the service function is a local implementation 37 or an external implementation 38. This does not need to be considered the application code of the application 15 itself. In particular, the interface module 36 may be interchanged or exchanged such that other service function may be provided as local implementations 37. As this can be achieved without changing the programming interface 30, no need of an adaptation of the applications 15 themselves is necessary. On start-up of the control device 11 or on start-up of the respective application 15, the processor circuit 14 may link the binary software code of the applications 15 to the newly provided interface module 36 using dynamic linking.

Thus, a unified API for all possible/needed cryptographic operations regardless of their TEE involvement may be provided. By this API it can be decided during implementation (or in some cases even runtime) which operation has to be performed securely, which can be performed without TEE involvement and where a mixed form is necessary.

This is done by the security engineers developing the cryptographic stack and is totally hidden from the using application.

This API is used by any application in the platform and offers cryptographic operations. When an operation is called, the implementation of this API decides (statically or dynamically) whether it needs a supporting TEE operation or not. If so it propagates only those operations to the TEE that must not be done outside.

The developer of any application does not be concerned with the specific security constrains and architectures in general and on the target ECU in specific.

The decision which operation can be performed where is entirely done by the security engineers developing the cryptographic stack. Furthermore this way the cryptographic operations and their place of execution can be configured for each target. Applications do not have to be adapted to possibly changing TEE-APIs, this is done by the crypto-integration, only once per ECU.

Overall, the example shows how a cryptographic abstraction layer and a use-case specific TEE access with access control can be provided.

### Reference signs

- 10: motor vehicle
- 11: control device
- 12: actuator
- 13: sensor
- 14: processor circuit
- 15: application
- 16: backend server
- 17: internet
- 18: communication link
- 19: communication data
- 20: radio link
- 21: internet connection
- 22: communication module
- 23: hardware module
- 24: service function
- 30: programming interface
- 31: service calls
- 32: process
- 33: user application
- 34: platform application
- 35: arrows
- 36: interface module
- 37: local implementation
- 38': calling function
- 38: external implementation
- 39: service function
- 40: cryptographic key
- 41: other process
- 42: access server
- 43: UDS server
- 44: client
- 45: process communication
- 46: client module
- 47: dummy implementation
- 48: calling function
- 49: call signals
- 50: stack

## Claims

1. Control device (11) comprising a processor circuit (14) for executing applications (15) that use cryptographic service functions (24) by calling a respective programming interface (30) of a cryptographic service function (24), wherein the processor circuit (14) is adapted to execute a respective application (15) as a process (32) of the processor circuit (14),
wherein the control device (11) comprises a trusted environment hardware module (23), wherein an interface module (36) comprises programming interfaces (30) for calling the cryptographic service functions (24) and is adapted to call one of the following implementations of the cryptographic service function (24) depending on which cryptographic service function (24) the respective programming interface (30) belongs to:
• a local implementation (37) that is executable as a part of the process (32) of a calling application (15) or in a parallel process of the processor circuit (14),
• an external implementation (38) that is provided by the trusted environment hardware module (23),
• a mixed implementation that uses both the local implementation (37) and the external implementation (38) to provide a respective part of a respective cryptographic service function (24),
wherein the interface module (36) is designed as an interchangeable software module that is interchangeable in the processor circuit (14) independently of the respective application (15),

2. Control device (11) according to claim 1, wherein at least one of the cryptographic service functions (24) is the local implementation (37) and at least one other of the cryptographic service functions (24) is the external implementation (38).

3. Control device (11) according to any of the preceding claims, wherein in the interface module (36) is provided as a software library and the processor circuit (14) is adapted to dynamically link the software library to the respective application (15).

4. Control device (11) according to any of the preceding claims, wherein the processor circuit (14) or another processor circuit of the control device (11) is adapted to operate a common access server (42) to the trusted environment hardware module (23) as a separate process (32) and a respective process (32) of the applications (15) is linked with the trusted environment hardware module (23) over the common access server (42).

5. Control device (11) according to claim 4, wherein the common access server (42) is a Unix domain socket, UDS, server (43) and the interface module (36) is designed to call a respective external implementation (38) of the cryptographic service function (24) using inter process communication to the UDS server (43).

6. Control device (11) according to claim 4 or 5, wherein the applications (15) comprise a client module (44) for communicating with the common access server (42), wherein the client module (44) comprises a local dummy implementation (47) of the respective external implementation (38) of at least one service function (24).

7. Control device (11) according to any of the preceding claims, wherein the interface module (36) is designed to decide which implementation is to be used:
• statically, or
• dynamically, in that the interface module (36) is designed to perform a look-up whenever a respective call of the programming interface (30) is received, wherein the look-up decides which implementation to use based on predefined configuration data.

8. Control device (11) according to any of the preceding claims, wherein the local implementation (37) provides a random number generation, RNG, and/or a hash generation and/or an authenticated encryption with associated data, AEAD, decryption.

9. Control device (11) according to any of the preceding claims, wherein the external implementation (38) provides a cryptographic key (40) based operation that uses a cryptographic key (40) that is stored inside the trusted environment hardware module (23),

10. Method for operating a control device (11), wherein a processor circuit (14) executes applications (15) that use cryptographic service functions (24) by calling a respective programming interface (30) of a cryptographic service function (24), wherein the processor circuit (14) executes a respective application (15) as a process (32) of the processor circuit (14),
wherein the control device (11) comprises a trusted environment hardware module (23), wherein an interface module (36) comprises programming interfaces (30) for calling the cryptographic service functions (24) and calls one of the following implementations of the cryptographic service function (24) depending on which cryptographic service function (24) is called over the respective programming interface (30):
• a local implementation (37) that is executed as a part of the process (32) of a calling application (15) or in a parallel process (32) of the processor circuit (14),
• an external implementation (38) that is provided by the trusted environment hardware module (23),
• a mixed implementation that uses both the local implementation (37) and the external implementation (38) to provide a part of a respective cryptographic service function (24),
wherein the interface module (36) is designed as an interchangeable software module that is interchangeable in the processor circuit (14) independently of the respective application (15)

11. Motor vehicle (10) comprising at least one control device (11) according to any one of claims 1 to 9.

## Patentansprüche

1. Steuervorrichtung (11), umfassend eine Prozessorschaltung (14) zum Ausführen von Anwendungen (15), die kryptografische Dienstfunktionen (24) verwenden, indem sie eine entsprechende Programmierschnittstelle (30) einer kryptografischen Dienstfunktion (24) verwenden, wobei die Prozessorschaltung (14) dazu angepasst ist, eine jeweilige Anwendung (15) als einen Prozess (32) der Prozessorschaltung (14) auszuführen, wobei die Steuervorrichtung (11) ein Hardware-Modul für eine vertrauenswürdige Umgebung (23) umfasst, wobei ein Schnittstellenmodul (36) Programmierschnittstellen (30) zum Aufrufen der kryptografischen Dienstfunktionen (24) umfasst und dazu angepasst ist, eine der folgenden Implementierungen der kryptografischen Dienstfunktion (24) aufzurufen, je nachdem, zu welcher kryptografischen Dienstfunktion (24) die jeweilige Programmierschnittstelle (30) gehört:
• einer lokalen Implementierung (37), die als Teil des Prozesses (32) einer aufrufenden Anwendung (15) oder in einem parallelen Prozess der Prozessorschaltung (14) ausführbar ist,
• einer externen Implementierung (38), die von dem Hardware-Modul für eine vertrauenswürdige Umgebung (23) bereitgestellt wird,
• einer gemischten Implementierung, die sowohl die lokale Implementierung (37) als auch die externe Implementierung (38) verwendet, um einen jeweiligen Teil einer jeweiligen kryptografischen Dienstfunktion (24) bereitzustellen, wobei das Schnittstellenmodul (36) als austauschbares Softwaremodul ausgelegt ist, das unabhängig von der jeweiligen Anwendung (15) in der Prozessorschaltung (14) austauschbar ist.

2. Steuervorrichtung (11) nach Anspruch 1, wobei mindestens eine der kryptografischen Dienstfunktionen (24) die lokale Implementierung (37) ist und mindestens eine andere der kryptografischen Dienstfunktionen (24) die externe Implementierung (38) ist.

3. Steuervorrichtung (11) nach einem der vorhergehenden Ansprüche, wobei das Schnittstellenmodul (36) als Softwarebibliothek bereitgestellt ist und die Prozessorschaltung (14) dazu angepasst ist, die Softwarebibliothek dynamisch mit der jeweiligen Anwendung (15) zu verknüpfen.

4. Steuervorrichtung (11) nach einem der vorhergehenden Ansprüche, wobei die Prozessorschaltung (14) oder eine andere Prozessorschaltung der Steuervorrichtung (11) dazu angepasst ist, einen gemeinsamen Zugriffsserver (42) für das Hardware-Modul der vertrauenswürdigen Umgebung (23) als separaten Prozess (32) zu betreiben, und ein jeweiliger Prozess (32) der Anwendungen (15) mit dem Hardware-Modul der vertrauenswürdigen Umgebung (23) über den gemeinsamen Zugriffsserver (42) verknüpft ist.

5. Steuervorrichtung (11) nach Anspruch 4, wobei der gemeinsame Zugriffsserver (42) ein Unix-Domain-Socket, UDS-Server (43) ist und das Schnittstellenmodul (36) so ausgelegt ist, dass es eine jeweilige externe Implementierung (38) der kryptografischen Dienstfunktion (24) unter Verwendung der Interprozesskommunikation mit dem UDS-Server (43) aufruft.

6. Steuervorrichtung (11) nach Anspruch 4 oder 5, wobei die Anwendungen (15) ein Client-Modul (44) zur Kommunikation mit dem gemeinsamen Zugriffsserver (42) umfassen, wobei das Client-Modul (44) eine lokale Dummy-Implementierung (47) der jeweiligen externen Implementierung (38) mindestens einer Dienstfunktion (24) umfasst.

7. Steuervorrichtung (11) nach einem der vorhergehenden Ansprüche, wobei das Schnittstellenmodul (36) dazu ausgelegt ist, zu entscheiden, welche Implementierung verwendet werden soll:
• statisch oder
• dynamisch, indem das Schnittstellenmodul (36) so ausgelegt ist, dass es bei jedem Empfang eines entsprechenden Aufrufs der Programmierschnittstelle (30) eine Suche durchführt, wobei die Suche auf der Grundlage vordefinierter Konfigurationsdaten entscheidet, welche Implementierung verwendet werden soll.

8. Steuervorrichtung (11) nach einem der vorhergehenden Ansprüche, wobei die lokale Implementierung (37) eine Zufallszahlengenerierung, Random Number Generation - RNG, und/oder eine Hash-Generierung und/oder authentifizierte Verschlüsselung mit zugehörigen Daten, Authenticated Encryption with Associated Data - AEAD-Entschlüsselung, bereitstellt.

9. Steuervorrichtung (11) nach einem der vorhergehenden Ansprüche, wobei die externe Implementierung (38) einen Betrieb auf der Grundlage eines kryptografischen Schlüssels (40) bereitstellt, der einen kryptografischen Schlüssel (40) verwendet, der innerhalb des Hardware-Moduls der vertrauenswürdigen Umgebung (23) gespeichert ist.

10. Verfahren zum Betreiben einer Steuervorrichtung (11), wobei eine Prozessorschaltung (14) Anwendungen (15), die kryptografische Dienstfunktionen (24) verwenden, ausführt, indem sie eine entsprechende Programmierschnittstelle (30) einer kryptografischen Dienstfunktion (24) verwenden, wobei die Prozessorschaltung (14) dazu angepasst ist, eine jeweilige Anwendung (15) als einen Prozess (32) der Prozessorschaltung (14) auszuführen, wobei die Steuervorrichtung (11) ein Hardware-Modul für eine vertrauenswürdige Umgebung (23) umfasst, wobei ein Schnittstellenmodul (36) Programmierschnittstellen (30) zum Aufrufen der kryptografischen Dienstfunktionen (24) umfasst und eine der folgenden Implementierungen der kryptografischen Dienstfunktion (24) aufruft, je nachdem, zu welcher kryptografischen Dienstfunktion (24) die jeweilige Programmierschnittstelle (30) gehört:
• einer lokalen Implementierung (37), die als Teil des Prozesses (32) einer aufrufenden Anwendung (15) oder in einem parallelen Prozess (32) der Prozessorschaltung (14) ausgeführt wird,
• einer externen Implementierung (38), die von dem Hardware-Modul für eine vertrauenswürdige Umgebung (23) bereitgestellt wird,
• einer gemischten Implementierung, die sowohl die lokale Implementierung (37) als auch die externe Implementierung (38) verwendet, um einen Teil einer jeweiligen kryptografischen Dienstfunktion (24) bereitzustellen, wobei das Schnittstellenmodul (36) als austauschbares Softwaremodul ausgelegt ist, das unabhängig von der jeweiligen Anwendung (15) in der Prozessorschaltung (14) austauschbar ist.

11. Kraftfahrzeug (10), das mindestens eine Steuervorrichtung (11) nach einem der Ansprüche 1 bis 9 umfasst.

## Revendications

1. Dispositif de commande (11) comprenant un circuit processeur (14) pour exécuter des applications (15) qui utilisent des fonctions (24) de service cryptographique en appelant une interface de programmation (30) respective d'une fonction (24) de service cryptographique, dans lequel le circuit processeur (14) est adapté pour exécuter une application (15) respective en tant que processus (32) du circuit processeur (14),
le dispositif de commande (11) comprenant un module matériel d'environnement de confiance, dans lequel un module d'interface (36) comprend des interfaces de programmation (30) pour appeler les fonctions (24) de service cryptographique et est adapté pour appeler l'une des mises en œuvre suivantes de la fonction (24) de service cryptographique en fonction de la fonction (24) de service cryptographique à laquelle appartient l'interface de programmation (30) respective :
• une mise en œuvre (37) locale qui est exécutable en tant que partie du processus (32) d'une application d'appel (15) ou dans un processus parallèle du circuit processeur (14),
• une mise en œuvre (38) externe qui est fournie par le module (23) matériel d'environnement de confiance,
• une mise en œuvre mixte qui utilise à la fois la mise en œuvre (37) locale et la mise en œuvre (38) externe pour fournir une partie respective d'une fonction (24) de service cryptographique respective,
dans lequel le module d'interface (36) est conçu en tant que module logiciel interchangeable qui est interchangeable dans le circuit processeur (14) indépendamment de l'application respective (15).

2. Dispositif de commande (11) selon la revendication 1, dans lequel au moins l'une des fonctions (24) de service cryptographique est la mise en œuvre (37) locale et au moins une autre des fonctions (24) de service cryptographique est la mise en œuvre (38) externe.

3. Dispositif de commande (11) selon l'une quelconque des revendications précédentes, dans lequel le module d'interface (36) est fourni sous la forme d'une bibliothèque logicielle et le circuit processeur (14) est adapté pour lier de manière dynamique la bibliothèque logicielle à l'application (15) respective.

4. Dispositif de commande (11) selon l'une quelconque des revendications précédentes, dans lequel le circuit processeur (14) ou un autre circuit processeur du dispositif de commande (11) est adapté pour faire fonctionner un serveur (42) d'accès commun vers le module (23) matériel d'environnement de confiance en tant que processus (32) séparé et un processus (32) respectif des applications (15) est lié au module (23) matériel d'environnement de confiance via le serveur (42) d'accès commun.

5. Dispositif de commande (11) selon la revendication 4, dans lequel le serveur (42) d'accès commun est un serveur (43) de sockets de domaine Unix, UDS (pour « Unix domain socket »), et le module d'interface (36) est conçu pour appeler une mise en œuvre (38) externe respective de la fonction (24) de service cryptographique en utilisant une communication interprocessus vers le serveur (43) UDS.

6. Dispositif de commande (11) selon la revendication 4 ou 5, dans lequel les applications (15) comprennent un module client (44) pour communiquer avec le serveur (42) d'accès commun, dans lequel le module client (44) comprend une mise en œuvre (47) fictive locale de la mise en œuvre (38) externe respective d'au moins une fonction (24) de service.

7. Dispositif de commande (11) selon l'une quelconque des revendications précédentes, dans lequel le module d'interface (36) est conçu pour décider quelle mise en œuvre doit être utilisée :
• de manière statique, ou
• de manière dynamique, en ce que le module d'interface (36) est conçu pour réaliser une recherche chaque fois qu'un appel respectif de l'interface de programmation (30) est reçu, la recherche décidant quelle mise en œuvre utiliser sur la base de données de configuration prédéfinies.

8. Dispositif de commande (11) selon l'une quelconque des revendications précédentes, dans lequel la mise en œuvre (37) locale fournit une génération de nombres aléatoires, RNG (pour « random number generation »), et/ou une génération de hachage et/ou un déchiffrement de chiffrement authentifié avec des données associées, AEAD (pour « authenticated encryption with associated data »).

9. Dispositif de commande (11) selon l'une quelconque des revendications précédentes, dans lequel la mise en œuvre (38) externe fournit une opération basée sur une clé cryptographique (40) qui utilise une clé cryptographique (40) stockée à l'intérieur du module (23) matériel d'environnement de confiance.

10. Procédé de fonctionnement d'un dispositif de commande (11), dans lequel un circuit processeur (14) exécute des applications (15) qui utilisent des fonctions (24) de service cryptographique en appelant une interface (30) de programmation respective d'une fonction (24) de service cryptographique, dans lequel le circuit processeur (14) exécute une application (15) respective en tant que processus (32) du circuit processeur (14),
dans lequel le dispositif de commande (11) comprend un module (23) matériel d'environnement de confiance, dans lequel un module d'interface (36) comprend des interfaces de programmation (30) pour appeler les fonctions (24) de service cryptographique et appelle l'une des mises en œuvre suivantes de la fonction (24) de service cryptographique en fonction de la fonction (24) de service cryptographique appelée via l'interface de programmation (30) respective :
• une mise en œuvre (37) locale qui est exécutée en tant que partie du processus (32) d'une application d'appel (15) ou dans un processus (32) parallèle du circuit processeur (14),
• une mise en œuvre (38) externe qui est fournie par le module (23) matériel d'environnement de confiance,
• une mise en œuvre mixte qui utilise à la fois la mise en œuvre (37) locale et la mise en œuvre (38) externe pour fournir une partie d'une fonction (24) de service cryptographique respective,
dans lequel le module d'interface (36) est conçu en tant que module logiciel interchangeable qui est interchangeable dans le circuit processeur (14) indépendamment de l'application respective (15).

11. Véhicule à moteur (10) comprenant au moins un dispositif de commande (11) selon l'une quelconque des revendications 1 à 9.
